# EUROPÄISCHE PATENTSCHRIFT

(11) **EP 2 530 436 B1**
(45) Veröffentlichungstag und Bekanntmachung des Hinweises auf die Patenterteilung: **02.11.2016**
(21) Anmeldenummer: 12157232.5
(22) Anmeldetag: 28.02.2012
(51) Int. Cl.: G01D 5/347

(54) **Verfahren und Vorrichtung zur Maßbandmontage**
Method and device for fitting measuring tape
Procédé et dispositif destinés au montage d'une bande de mesure

(30) Priorität: 31.05.2011 DE 102011103739
(43) Veröffentlichungstag der Anmeldung: 05.12.2012
(73) Patentinhaber: Dr. Johannes Heidenhain GmbH, 83301 Traunreut (DE)
(72) Erfinder: Pucher, Wolfgang, 83278 Traunstein (DE); Ahrendt, Dirk, 83339 Chieming (DE); Kühnhauser, Stefan, 83329 Waging am See (DE)

(56) Entgegenhaltungen:
- EP-A1- 1 643 216
- DE-A1- 19 751 019
- US-A1- 2005 235 502

## Beschreibung

Die vorliegende Erfindung betrifft ein Verfahren zur Montage eines Maßbandes einer Winkelmessvorrichtung sowie eine Vorrichtung zur Ausführung des Verfahrens.

Weiterhin betrifft die Erfindung eine Baueinheit, bestehend aus einem Maßband und einer Vorrichtung zur erfindungsgemäßen Montage dieses Maßbandes.

Bei Winkelmesseinrichtungen wird es vermehrt erforderlich ein rotierendes Objekt mit relativ großem Durchmesser exakt zu positionieren. Als Anwendung hierfür sind beispielsweise große Rundtische in Bearbeitungsmaschinen, insbesondere aber Teleskope, zu nennen. Um eine möglichst exakte Winkelpositionierung des Rundtisches oder des Teleskops zu ermöglichen, ist es bekannt, eine Umfangsfläche an dem zu messenden Objekt zur Verfügung zu stellen und längs des Umfangs ein Maßband mit einer Messteilung zu montieren. Als einfache Montagemöglichkeit ist das Spannen des Maßbandes über den Umfang bekannt. Dabei wird das Maßband an einem ersten Ende festgehalten und mit dem übrigen Bereich des Maßbandes die konvex gekrümmte Umfangsfläche des zu messenden Objektes umschlungen. Durch Haftreibung zwischen der Umfangsfläche und dem Maßband bilden sich im Maßband über den Umfang örtlich unterschiedliche Spannungsverhältnisse aus. Äquivalent zur örtlich variierenden Spannung des Maßbandes verhält sich auch die Abweichung der auf dem Maßband aufgebrachten Messteilung entlang des Maßbandes, was insbesondere zu kurzperiodischen Fehlern bei der Winkelmessung führt.

In der DE 197 51 019 C2 ist ein Montageverfahren sowie eine Vorrichtung beschrieben, mit dem bzw. mit der an beiden Enden des Maßbandes die gleiche Spannkraft eingeleitet wird. Dadurch wird im Vergleich zu Systemen, bei denen nur ein Ende des Maßbandes fest mit seiner Unterlage verbunden wird und bei der Montage auf das zweite Ende eine Spannkraft ausgeübt wird, zwar eine Verringerung des Winkelfehlers erzielt, die Spannungsverhältnisse über den gesamten Umfang sind aber, insbesondere bei großen Durchmessern, für genaue Winkelmessungen nach wie vor noch unzureichend.

Aufgabe der vorliegenden Erfindung ist es daher, ein Verfahren zur Montage eines Maßbandes anzugeben, mit dem das Maßband derart an einer Umfangsfläche eines zu messenden Objektes montierbar ist, dass eine exakte Winkelmessung über diesen Umfang ermöglicht wird.

Diese Aufgabe wird erfindungsgemäß durch ein Verfahren mit den Merkmalen des Anspruchs 1 gelöst.

Zur Montage eines Maßbandes an einer Umfangsfläche eines Trägers wird demgemäß zuerst folgender erster Verfahrensschritt durchgeführt: Umschlingen der Umfangsfläche des Trägers mit dem Maßband und Unterstützen des Maßbandes derart, dass es beabstandet zu der Umfangsfläche des Trägers verläuft und Ausüben einer Spannkraft auf das Maßbandes, wobei sich die auf das Maßband einwirkende Spannkraft zumindest annähernd gleichmäßig über den Umfang verteilt.

Das möglichst reibungsfreie Halten des Maßbandes im Abstand zur Umfangsfläche des Trägers erfolgt mittels In Umfangsrichtung voneinander beabstandet angeordneter Unterstützungen.

Dabei können die Unterstützungen vor dem Umschlingen der Umfangsfläche mit dem Maßband am Träger positioniert werden. Alternativ können die Unterstützungen und das Maßband gemeinsam um den Träger gelegt werden oder es erfolgt zuerst das Umschlingen der Umfangsfläche mit dem Maßband und erst danach wird der reibungsfreie Zustand des Maßbandes geschaffen, indem es von der Umfangsfläche abgehoben wird.

Nachdem eine gleichmäßige Spannungsverteilung über die gesamte Maßbandlänge und somit über den Umschlingungsumfang erreicht ist, wird die Unterstützung des Maßbandes ausgehend von einem Fixpunkt aufgehoben, so dass sich das Maßband an die Umfangsfläche des Trägers bei Aufrechterhaltung der Spannkraft anlegt. Dieses Anlegen des Maßbandes an die Umfangsfläche erfolgt in Umfangsrichtung fortlaufend.

Der Fixpunkt kann dabei durch Fixieren des Maßbandes am Träger, beispielsweise mit einem seiner Enden, gebildet sein, wobei am anderen Ende des Maßbandes die Spannkraft aufgebracht wird.

Alternativ kann eine Spannkraft auch gleichzeitig an beiden Enden des Maßbandes eingeleitet werden, wie beispielsweise in der DE 197 51 019 C2 dargestellt ist. In diesem Fall bildet sich der Fixpunkt in der Mitte des mit dem Maßband umschlungenen Umfangs des Trägers aus, von dem aus dann die Unterstützung des Maßbandes aufgehoben werden muss, und das Maßband kontinuierlich an die Umfangsfläche angelegt wird.

Die Spannkraft ist eine Zugkraft am Maßband, die durch ein Gewicht oder eine Feder eingeleitet werden kann.

Zur Schaffung des Zustandes der reibungsarmen Lagerung des Maßbandes weisen die Unterstützungen in vorteilhafter Weise Rollen in Form von Führungsrollen auf. Zwischen Träger und Maßband tritt somit während des Spannungsausgleichs nur noch die relativ geringe Rollreibung der Rollen auf, an denen sich das Maßband anlegt. Durch Verwendung von Rollen tritt somit keine störende Haftreibung mehr auf. Diese Rollen sind im Träger oder an den Unterstützungen möglichst reibungsarm gelagert.

Damit sich die eingebrachte Spannkraft gleichmäßig über die gesamte Maßbandlänge verteilen kann, wird gemäß der Erfindung während der Montage ein Zustand geschaffen, in dem eine reibungsarme Lagerung des Maßbandes gegenüber dem Träger vorliegt. Durch die erfindungsgemäßen Maßnahmen wird über den Umfang des Maßbandes ein homogener Spannungszustand erreicht. Ein partielles Verrutschen des Maßbandes in Umfangsrichtung (Stick-Slip-Effekt) während des Messbetriebs wird dadurch weitgehend vermieden.

Die Umfangsfläche des Trägers, an welcher das Maßband montiert wird, kann sich über 360°, also über eine vollständige Umdrehung, oder über einen Sektor kleiner 360° erstrecken.

Weiterhin soll mit der Erfindung eine einfach handhabbare Vorrichtung zur Ausführung des Verfahrens angegeben werden.

Eine derartige Vorrichtung ist im Anspruch 4 angegeben. Besonders vorteilhafte Ausgestaltungen dieser Vorrichtung sind in den abhängigen Ansprüchen 5 bis 10 definiert.

Die Unterstützungen können mehrere unabhängig voneinander in Umfangsrichtung verlagerbare Unterstützungen sein, beispielsweise in Form von in Umfangsrichtung verfahrbaren Wagen.

Mehrere in Umfangsrichtung beabstandete Unterstützungen können auch mittels eines Verbindungskörpers miteinander gekoppelt sein und gemeinsam in Umfangsrichtung verlagerbar sein.

Die Unterstützungen können Laufrollen aufweisen, mittels derer sie in Umfangsrichtung verlagerbar am Träger geführt sind, insbesondere in einer Nut des Trägers verfahrbar sind.

Zumindest eine der Unterstützungen kann einen Magneten aufweisen. Dieser Magnet kann dazu verwendet werden, um die Unterstützung am Träger mittels Magnetkraft zu halten. Die magnetische Haltekraft kann variabel ausgestaltet sein, indem beispielsweise der Abstand des Magneten zum Träger variierbar ist.

Zumindest eine der Unterstützungen kann dazu ausgebildet sein, um den Abstand zwischen der Umfangsfläche und dem Maßband zu verändern. Hierzu weist die Unterstützung beispielsweise einen schwenkbaren Halter auf, der an seinem Ende eine das Maßband führende Führungsrolle aufweist.

Eine Baueinheit welche die Vorrichtung zur Ausführung des Verfahrens sowie das an einem Träger zu montierende Maßband aufweist, ist im Anspruch 11 angegeben.

Weitere Vorteile sowie Einzelheiten der vorliegenden Erfindung ergeben sich aus der nachfolgenden Beschreibung von Ausführungsbeispielen anhand der beiliegenden Figuren.

Es zeigen
- Figur 1: einen ersten Verfahrensschritt zum Montieren eines Maßbandes auf einer Umfangsfläche;
- Figur 2: einen zweiten Verfahrensschritt zum Montieren des Maßbandes;
- Figur 3: einen Zustand beim Montieren des Maßbandes;
- Figur 4: eine Ausgestaltung eines Wagens als Unterstützung;
- Figur 5: einen dritten Verfahrensschritt zum Montieren des Maßbandes mit einer ersten Position des ersten Wagens;
- Figur 6: einen vierten Verfahrensschritt zum Montieren des Maßbandes mit einer zweiten Position des ersten Wagens;
- Figur 7: einen fünften Verfahrensschritt zum Montieren des Maßbandes;
- Figur 8: einen sechsten Verfahrensschritt zum Montieren des Maßbandes;
- Figur 9: einen siebten Verfahrensschritt zum Montieren des Maßbandes;
- Figur 10: einen achten Verfahrensschritt zum Montieren des Maßbandes;
- Figur 11: das am Träger fertig montierte Maßband;
- Figur 12: ein zweites Ausführungsbeispiel zur Montage eines Maßbandes auf einem Kreisbogen;
- Figur 13: ein drittes Ausführungsbeispiel zur Montage eines Maßbandes an einer Umfangsfläche eines Trägers;
- Figur 14: einen Verfahrensschritt zur Montage eines Maßbandes mit Unterstützungen gemäß Figur 13;
- Figur 15: einen weiteren Verfahrensschritt zur Montage des Maßbandes mit Unterstützungen gemäß Figur 13, und
- Figur 16: eine vorteilhafte Ausgestaltung der Unterstützungen gemäß Figur 13.

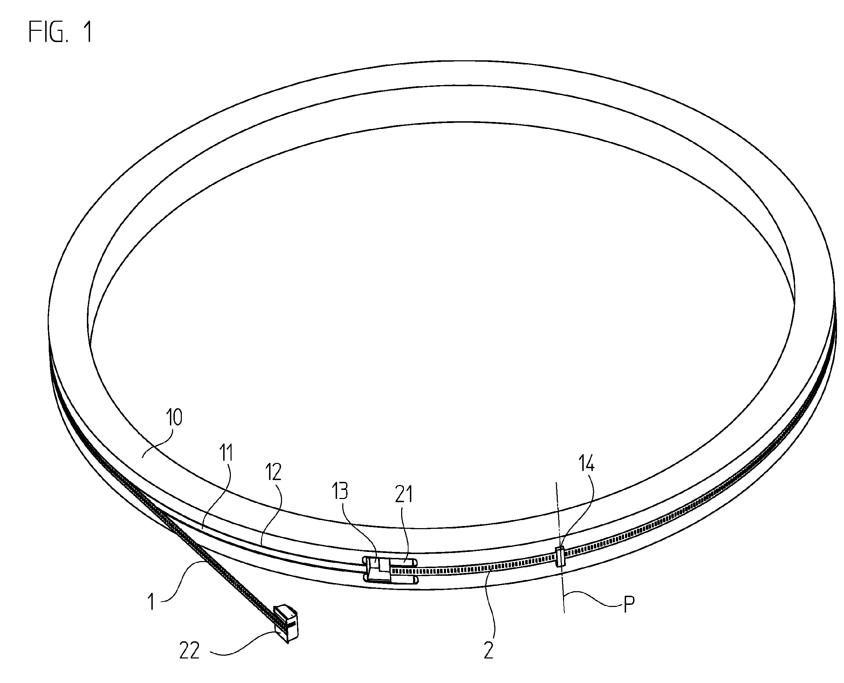

Die Figuren 1 bis 11 zeigen ein erstes Beispiel zur Montage eines Maßbandes 1 an einer Umfangsfläche 11 eines Trägers 10, der im Ausführungsbeispiel eine Teleskop-Ringstruktur ist. Die Umfangsfläche 11 wird im Beispiel vom Boden einer in den Träger 10 eingebrachten Nut 12 gebildet, die über volle 360° verläuft. Der Durchmesser einer derartigen Teleskop-Ringstruktur kann einige Meter betragen.

Das Maßband 1 ist ein biegbares aber weitgehend längenstabiles Band, insbesondere ein Stahlband. Das Maßband 1 trägt an seiner Oberseite eine Messteilung 2, die optisch abtastbar ist. Anstelle der optisch abtastbaren Messteilung 2 kann auch eine magnetisch, kapazitiv oder induktiv abtastbare Messteilung vorgesehen sein. Die Messteilung kann inkremental zur Relativmessung einer Winkelposition oder codiert zur absoluten Winkelmessung ausgestaltet sein, dabei kann es sich um eine einspurige oder mehrspurige Messteilung handeln.

Zur Montage des Maßbandes 1 an dem Träger 10 erfolgt in einem ersten in Figur 1 dargestellten Schritt eine Umschlingung der Umfangsfläche 11 des Trägers 10 mit dem Maßband 1. Das erste Ende des Maßbandes 1 wird mit einem ersten Teil 21 eines Spannschlosses verbunden. Dieses erste Teil 21 des Spannschlosses wird in eine Ausnehmung 13 des Trägers 10 eingesetzt. Das Maßband 1 wird danach über den Außenumfang des Trägers 10 in die Nut 12 eingelegt. Weiterhin wird das erste Ende des Maßbandes 1 am Träger 10 fixiert. Diese Fixierung erfolgt im dargestellten Beispiel in der Nähe der Ausnehmung 13 mittels eines Klemmstückes 14. In nicht gezeigter Weise kann auf das Klemmstück 14 verzichtet werden, wenn die Fixierung des Maßbandes 1 am Träger 10 mittels des ersten Teiles 21 des Spannschlosses selbst erfolgt, an dem das erste Ende des Maßbandes 1 befestigt ist.

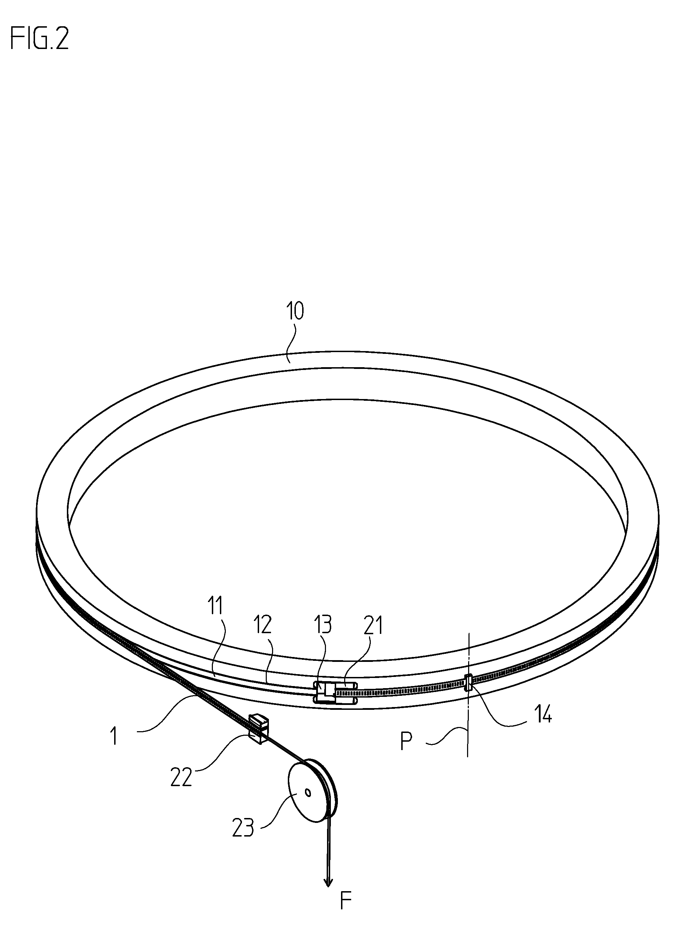

In einem zweiten Schritt wird auf das Maßband 1 eine Spannkraft F ausgeübt, wie in Figur 2 dargestellt ist. Die Einbringung der Spannkraft F erfolgt beispielsweise mittels Anbringen eines Gewichtes über eine Umlenkrolle 23, wie in Figur 2 schematisch dargestellt. Die Einleitung der Spannkraft F erfolgt am zweiten Ende des Maßbandes 1, beispielsweise an einem zweiten Teil 22 des am zweiten Ende des Maßbandes 1 befestigten Spannschlosses. Das Maßband 1 liegt an der Umfangsfläche 11 der Nut 12 des Trägers 10 an. Durch Haftreibung zwischen dem Maßband 1 und der Umfangsfläche 11 reduziert sich die Spannung des Maßbandes 1 ausgehend von der Stelle der Einleitung über den Umfang und verläuft somit über den Umfang inhomogen. Ein inhomogener Verlauf der Spannung über den umschlungenen Bereich des Maßbandes kann auch durch unterschiedliche Reibwerte zwischen der Umfangsfläche 11 und dem Maßband 1 auftreten.

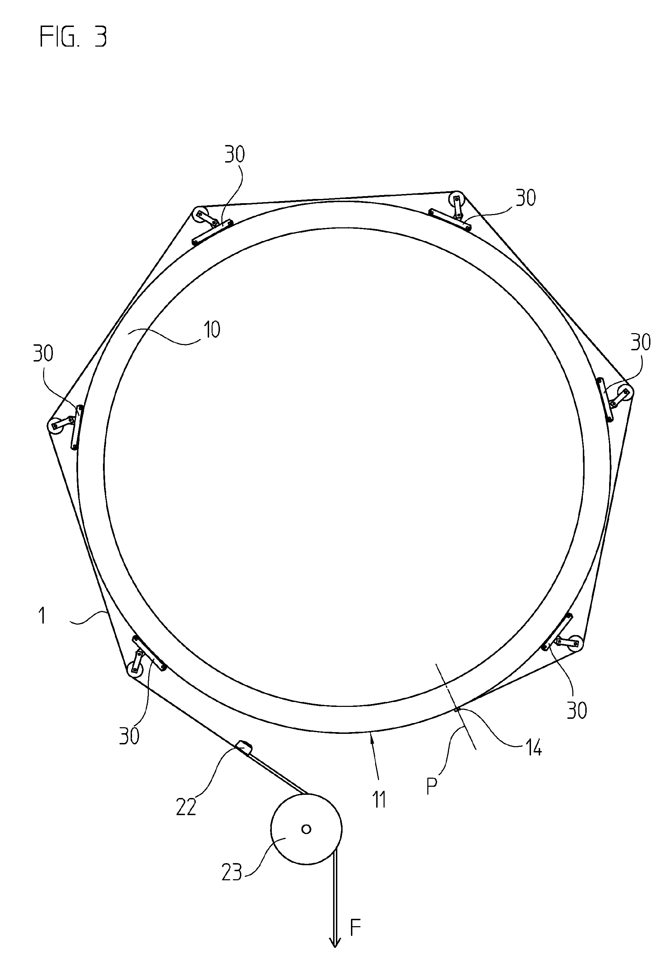

Erfindungsgemäß wird nun eine homogene Spannung des Maßbandes 1 erreicht, indem das Maßband 1 während des Montageprozesses über den Umfang möglichst reibungsarm gelagert wird. Erreicht wird dies dadurch, dass ein reibungsbehafteter Kontakt zwischen dem Maßband 1 und der Umfangsfläche 11 aufgehoben wird, so dass sich die eingebrachte Spannkraft F über den Umfang, also über die gesamte Maßbandlänge, gleichmäßig verteilen kann. Hierzu werden im vorgespannten Zustand Unterstützungen 30 zwischen der Umfangsfläche 11 und dem Maßband 1 derart eingebracht, dass das Maßband 1 ausgehend vom am Träger 10 fixierten ersten Ende über den gesamten Umfang beabstandet zur Umfangsfläche 11 verläuft. Dieser Zustand ist in Figur 3 dargestellt.

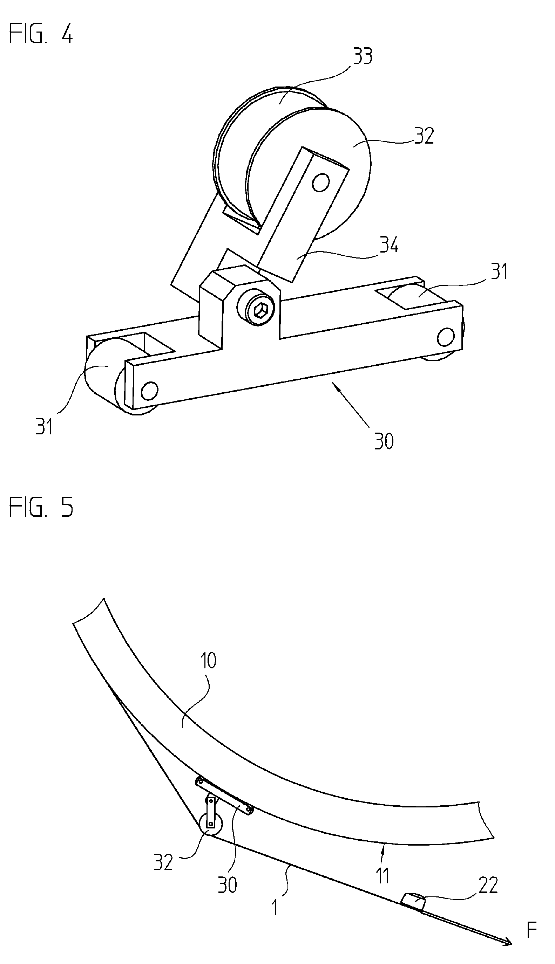

Die Unterstützungen sind im ersten Ausführungsbeispiel Wagen 30, von denen mehrere nacheinander zwischen der Umfangsfläche 11 des Trägers 10 und dem gespannten Maßband 1 einführbar sind und dadurch das Maßband 1 von der Umfangsfläche 11 abheben. Die Wagen 30 sind derart ausgestaltet, dass sie in der Nut 12 in Umfangsrichtung geführt sind. Der Aufbau eines derartigen Wagens 30 ist in Figur 4 beispielhaft schematisch dargestellt. Jeder Wagen 30 besteht demnach aus zwei kugelgelagerten Laufrollen 31, die in der Nut 12 des Trägers 10 abrollen und dort geführt sind. Eine weitere kugelgelagerte Rolle dient als Führungsrolle 32 zur Führung des Maßbandes 1, wozu diese am Außenumfang eine Nut 33 aufweist. Die Führungsrolle 32 kann an einem schwenkbaren Halter 34 befestigt sein, wodurch die Höhe des Wagens 30 und somit der gewünschte Abstand zwischen der Umfangsfläche 11 des Trägers 10 und dem Maßband 1 eingestellt werden kann.

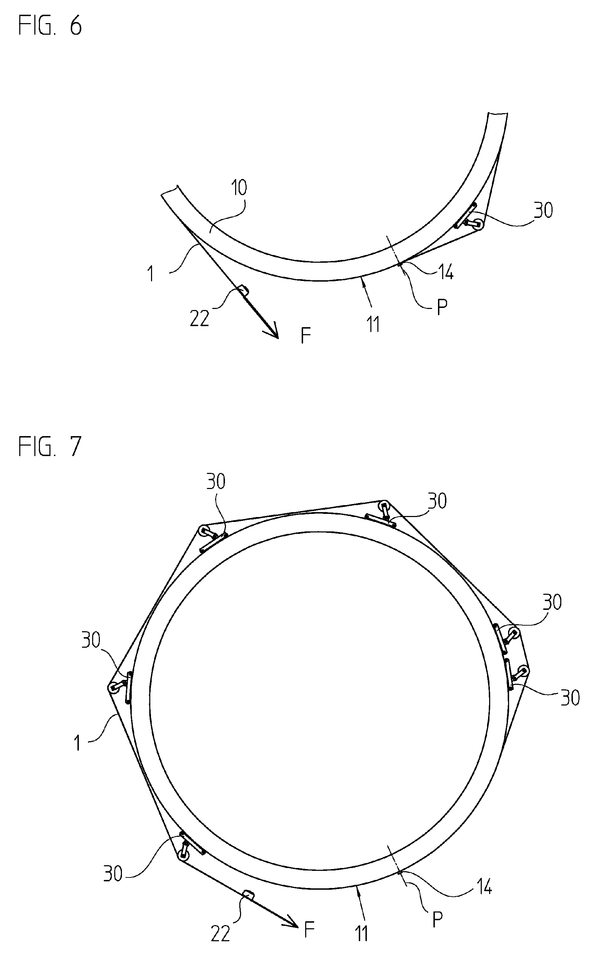

Nachfolgend wird nun erläutert, wie der in Figur 3 dargestellte Zustand des Maßbandes 1 erreicht wird. Wie in Figur 5 dargestellt ist, wird ein erster Wagen 30 in die Nut 12 des Trägers 10 eingesetzt und in Umfangsrichtung verfahren. Kommt die Führungsrolle 32 des Wagens 30 in Kontakt mit dem Maßband 1, hebt dieses in radialer Richtung von der Umfangsfläche 11 ab. Der Wagen 30 wird dann in tangentialer Richtung entlang des Umfangs weiter in Richtung des am Träger 10 befestigten Klemmstücks 14 verschoben, so dass der Abschnitt des Maßbandes 1 zwischen Fixpunkt P und Wagen 30 keinen Kontakt mehr mit der Umfangsfläche 11 hat. Nachdem dieser erste Wagen 30 diese Endposition erreicht hat, wird dieser an dieser Endposition unverschiebbar gehaltert. Diese Halterung kann durch Klemmung der Laufrollen 31 erfolgen, wozu in dem Wagen 30 ein Klemmmechanismus integriert ist. Dieser damit erreichte Zustand ist in Figur 6 dargestellt.

Nachfolgend werden die weiteren Wagen 30 zwischen der Umfangsfläche 11 und dem Maßband 1 eingeschoben, bis der in Figur 3 dargestellte Zustand erreicht ist und das Maßband 1, vom Klemmstück 14 ausgehend, über den gesamten Umfang von der Umfangsfläche 11 beabstandet ist. Der Abstand der Wagen 30 untereinander (in Umfangsrichtung betrachtet) ist dabei so zu wählen, dass der jeweils zwischen zwei Wagen 30 gelegene Abschnitt des Maßbandes 1 komplett von der Umfangsfläche 11 abgehoben bzw. beabstandet ist. Die Anzahl der dazu benötigten Wagen 30 richtet sich nach dem Durchmesser des Trägers 10 bzw. der Umfangsfläche 11. Durch das Abheben des Maßbandes 1 von der Umfangsfläche 11 wirkt der eingebrachten Spannkraft F über den gesamten Umfang nur noch die sehr geringe Rollreibung der Führungsrollen 32 der Wagen 30 entgegen. Somit kann sich die eingebrachte Spannkraft F über die gesamte Länge des Maßbandes 1 vom Klemmstück 14, also des Fixpunktes P, ausgehend bis zum zweiten Ende weitgehend gleichmäßig verteilen.

Nachdem alle Wagen 30 eingeführt wurden und sich die Spannkraft F homogen über den gesamten Umfang gleichmäßig verteilt hat, kann mit dem Entfernen der Unterstützungen, im Beispiel eben der Wagen 30, begonnen werden. Der erste Wagen 30 wird hierzu in Richtung des zweiten Wagens 30 verschoben, und zwar bis kurz vor den zweiten Wagen 30, wie in Figur 7 dargestellt. Bei diesem Verschieben des ersten Wagens 30 in Richtung des zweiten Wagens 30 legt sich das Maßband 1 in gespanntem Zustand in tangentialer Richtung an die Umfangsfläche 11 der Nut 12 an.

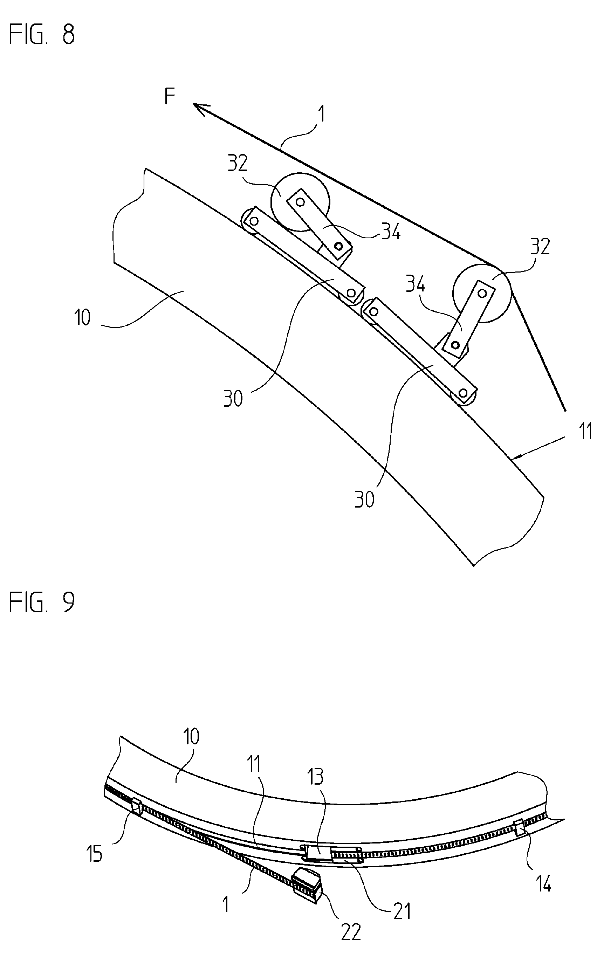

Anschließend wird der schwenkbare Halter 34 des zweiten Wagens 30 durch Umklappen in Richtung zur Umfangsfläche 11 hin verlagert. Durch diese Maßnahme wird der Kontakt der Führungsrolle 32 zum Maßband 1 aufgehoben und der zweite Wagen 30 kann aus der Nut 12 des Trägers 10 entnommen werden. Der Zustand mit eingeklappter Führungsrolle 32 des zweiten Wagens 30 ist in Figur 8 dargestellt.

Eine Alternative zum umklappbaren Halter 32 besteht darin, den ersten Wagen 30 mit einer größeren Führungsrolle auszugestalten, derart, dass der Durchmesser dieser Führungsrolle größer ist als der Durchmesser der Führungsrollen der weiteren Wagen 30. Dadurch ergibt sich beim Verschieben des ersten Wagens 30 in Richtung des zweiten Wagens 30 auch ein Abheben des Maßbandes 1 von der Führungsrolle des zweiten Wagens 30. Wenn der erste Wagen 30 weit genug in Richtung des zweiten Wagens 30 verschoben wurde wird der Kontakt der Führungsrolle des zweiten Wagens 30 zum Maßband 1 aufgehoben und der zweite Wagen 30 kann aus der Nut 12 des Trägers 10 entnommen werden.

Dieser Vorgang wird nun zwischen dem ersten Wagen 30 und den weiteren Wagen 30 wiederholt durchgeführt. So wird der erste Wagen 30 in Richtung des dritten Wagens 30 verschoben und die Führungsrolle 32 durch Umschwenken des Hebels 34 der Kontakt der Führungsrolle 32 des dritten Wagens 30 mit dem Maßband 1 aufgehoben. In diesem Zustand kann nun der dritte Wagen 30 aus der Nut 12 des Trägers 10 entnommen werden. Dieser Entnahmevorgang wird solange wiederholt, bis der erste Wagen 30 das zweite Ende des Maßbandes 1 erreicht hat und vollständig aus der Nut 12 herausgenommen werden kann.

Damit die eingebrachte Spannkraft F in dem bereits mit der Umfangsfläche 12 in Kontakt gebrachten Bereich des Maßbandes 1 erhalten bleibt, wird das Maßband 1 im Bereich des zweiten Endes an dem Träger 10 fixiert, im Beispiel mittels eines zweiten Klemmstücks 15. Dieser Zustand ist in Figur 9 dargestellt.

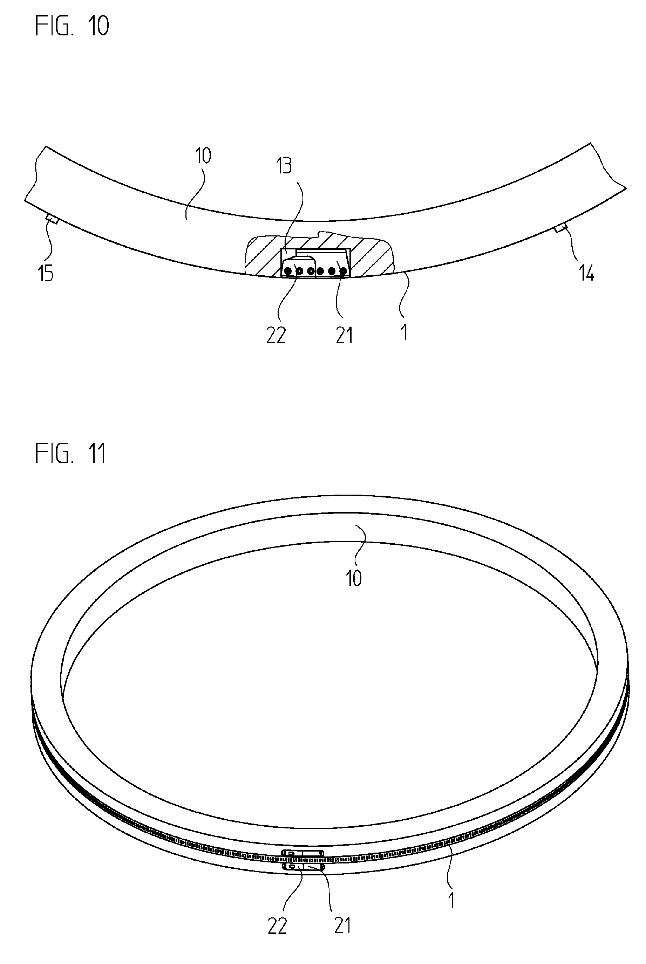

Nun wird die Vorrichtung zum Einbringen der Spannkraft F entfernt, so dass der zweite Teil 22 des Spannschlosses in die Ausnehmung 13 des Trägers 10 eingelegt werden kann und mit dem ersten Teil 21 des Spannschlosses verschraubt werden kann, wie in Figur 10 dargestellt ist. Durch diese Verschraubung wird auf das Maßband 1 in dem Bereich des Spannschlosses 21, 22 zwischen dem ersten Klemmstück 14 und dem zweiten Klemmstück 15 die noch fehlende Vorspannung eingebracht. Danach wird die Fixierung des Maßbandes 1 am Träger gelöst, indem das erste Klemmstück 14 und das zweite Klemmstück 15 entfernt werden. Das am Träger 10 fertig montierte Maßband 1 ist in Figur 11 dargestellt. In diesem Zustand liegt das Maßband 1 an der gesamten Umfangsfläche 11 gespannt an. Durch den Einsatz des Spannschlosses 21, 22 werden die beiden Enden des Maßbandes 1 im Beispiel miteinander verbunden, alternativ sind auch andere Verbindungsmittel denkbar, wie beispielsweise Verschweißen der beiden Enden miteinander.

Nach dem Verbinden der beiden Maßstabenden kann das Maßband 1 im Messbetrieb an keiner Stelle mit dem Träger 10 fixiert sein. Alternativ kann das Maßband zur Bildung eines Bezugspunktes an einer Stelle oder einem Bereich mit dem Träger fixiert sein, beispielsweise durch Klemmen oder Kleben.

Die eingebrachte Spannkraft F wird so groß gewählt, dass auch bei unterschiedlicher thermisch bedingter Ausdehnung zwischen Träger 10 und Maßband 1 ein sicheres Anliegen des Maßbandes 1 am Träger 10 im Messbetrieb gewährleistet ist.

Das anhand der Figuren 1 bis 11 dargestellte Verfahren kann auch ohne der beiden Klemmstücke 14, 15 ausgeführt werden, wenn das erste Teil 21 des Spannschlosses die Funktion des ersten Klemmstücks 14 und das zweite Teil 22 des Spannschlosses die Funktion des zweiten Klemmstücks 15 übernimmt.

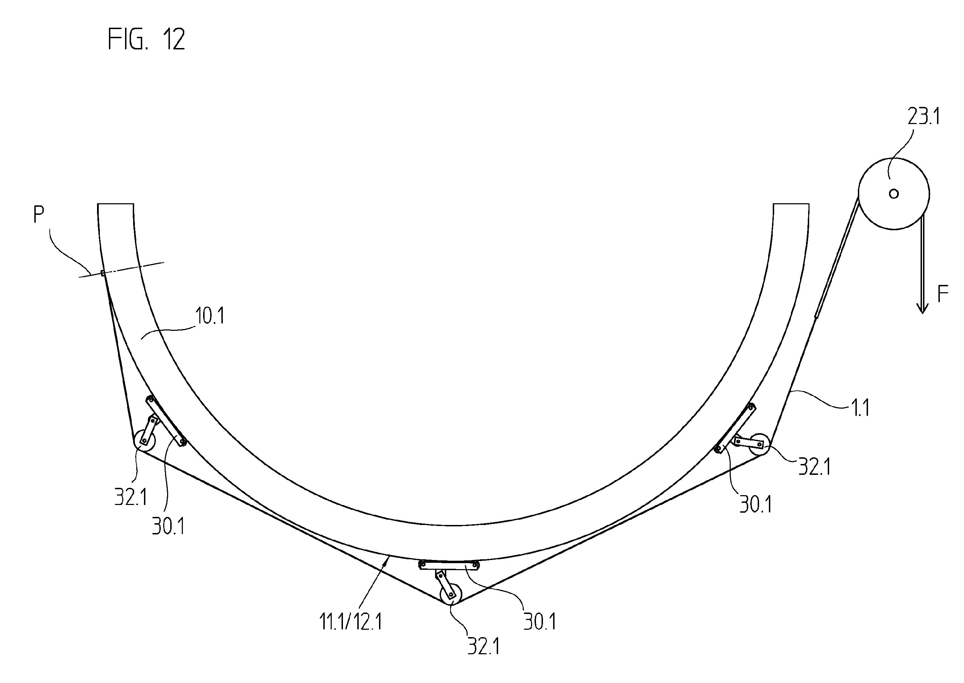

Neben der Montage des Maßbandes 1 über 360° ist erfindungsgemäß auch eine Montage an einem die Umfangsfläche 11.1 bildenden Kreisbogen, beispielsweise eines segmentförmigen Trägers 10.1, mit einer Umfangsfläche 11.1 kleiner 360° möglich. Die Verfahrensschritte laufen analog zum eingangs erläuterten Verfahren ab und die Vorrichtung zur Ausführung des Verfahrens weist einen vergleichbaren Aufbau auf, weshalb nur eine kurze Erläuterung anhand der Figur 12 erfolgt. Es wird wiederum ein Träger 10.1 zur Verfügung gestellt, in dem beispielsweise eine umlaufende Nut 12.1 zur Aufnahme des Maßbandes 1.1 eingebracht ist. Der Träger 10.1 ist bogenförmig ausgestaltet. Das Maßband 1.1 wird mit seinem ersten Ende wiederum an dem Träger 10.1 am Fixpunkt P fixiert, beispielsweise durch Verschrauben. Ein Spannschloss ist hier nicht erforderlich. Über eine Vorrichtung mit Umlenkrolle 23.1 wird eine Spannkraft F auf das Maßband 1.1 ausgeübt und es werden wiederum Unterstützungen in Form von Wagen 30.1 zwischen der Umfangsfläche 12.1 und dem Maßband 1.1 eingeführt, um einen Abstand zwischen der Umfangsfläche 12.1 und dem Maßband 1.1 herzustellen. Die Wagen 30.1 werden nach erfolgtem Ausgleich der Spannkraft F des Maßbandes 1.1 über den gesamten segmentförmigen Träger 10.1, also über die gesamte Maßbandlänge, von dem Fixpunkt P ausgehend, wieder der Reihe nach entnommen, bis auch der letzte Wagen 30.1 aus der Nut 12.1 entnommen ist. Durch das schrittweise Entnehmen aller Wagen 30.1 legt sich das Maßband 1.1 in gespanntem Zustand fortlaufend tangential an die Umfangsfläche 12.1 an. Nachdem der letzte Wagen 30.1 entnommen wurde, wird das zweite Ende des Maßbands 1.1 mit dem Träger 10.1 fixiert, beispielsweise durch Klemmung mit einem Klemmstück oder durch Verschrauben. Die Ausgestaltung der Wagen 30.1 entspricht den Wagen des ersten Ausführungsbeispiels, so dass mittels der Wagen 30.1 die Haftreibung zwischen der Umfangsfläche 11.1 und dem Maßband 1.1 aufgehoben wird und während des Zustands des Ausgleichs der Spannkraft F über den gesamten Umschlingungswinkel nur die äußerst geringe Rollreibung der in den Wagen 30.1 gelagerten Führungsrollen 32.1 auf das Maßband 1.1 einwirkt und dem homogenen Ausgleich entgegenwirkt.

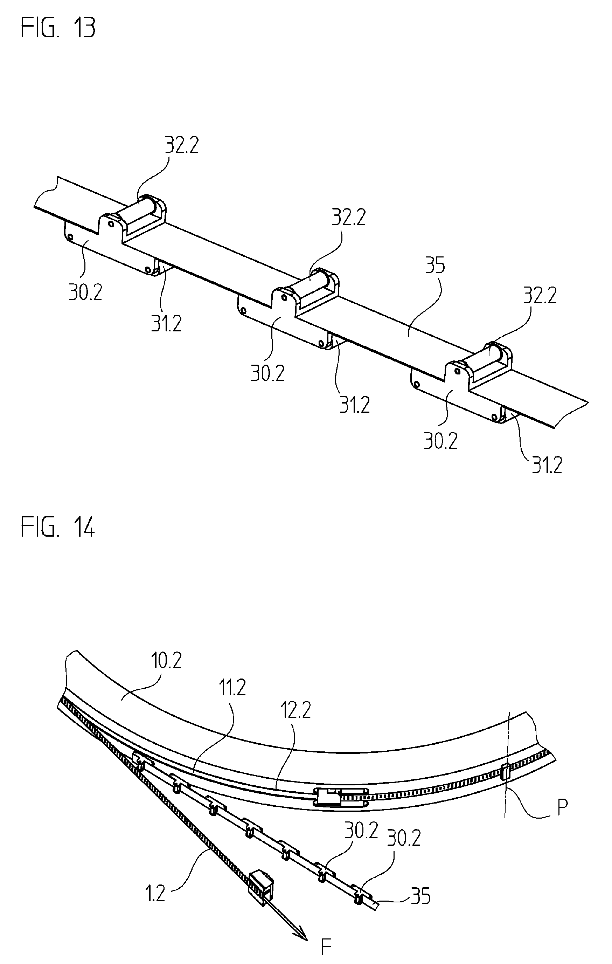

Anhand der Figuren 13 bis 16 wird nachfolgend ein drittes Ausführungsbeispiel näher erläutert. Der Unterschied zu den bisher erläuterten Ausführungsbeispielen besteht darin, dass die einzeln betätigbaren Unterstützungselemente, im Beispiel als Wagen 30, 30.1 ausgebildet, nun miteinander verbunden sind und eine Art Kette bilden. Die Wagen 30.2 können dann gemeinsam in miteinander verbundenen Zustand eingeführt und nach erfolgtem Ausgleich der Spannkraft F des Maßbandes 1.2 wieder gemeinsam entfernt werden. Das Prinzip dieser Anordnung ist in Figur 13 dargestellt. Jeder der Wagen 30.2 besteht wiederum aus einer Führungsrolle 32.2 zum geführten Abheben des Maßbandes 1.2 und aus Laufrollen 31.2, um den Wagen 30.2 in Umfangsrichtung des Trägers 10.2 zu führen. Die Wagen 30.2 sind mittels eines flexiblen Verbindungskörpers 35 miteinander verbunden. Der Verbindungskörper 35 kann beispielsweise ein Stahlband sein.

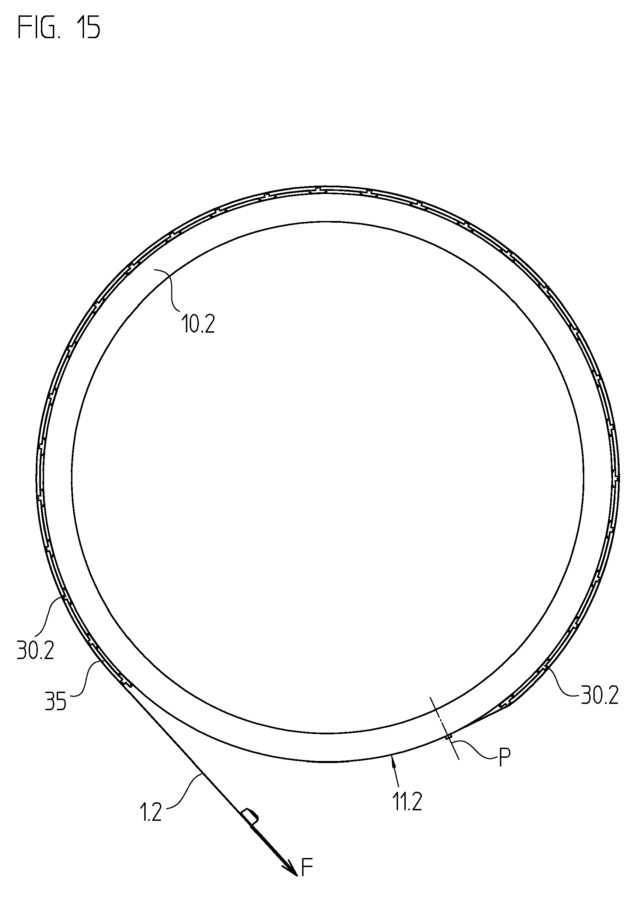

Die Umfangsfläche 11.2 des Trägers 10.2 wird wiederum mit dem Maßband 1.2 umschlungen und auf zumindest ein Maßbandende wird eine Spannkraft F ausgeübt. Das Maßband 1.2 kann wieder in einer Nut 12.2 des Trägers 10.2 liegen, wobei die Umfangsfläche 11.2 dann vom Nutgrund der Nut 12.2 gebildet wird. In diesem Zustand werden die miteinander verbundenen Wagen 30.2 zwischen den Träger 10.2 und das Maßband 1.2 eingeschoben, wie in Figur 14 dargestellt ist. Die Anordnung der Unterstützungen in Form von miteinander verbundenen Wagen 30.2 ist derart ausgestaltet, dass im eingebrachten Zustand das Maßband 1.2 vom ersten am Träger fixierten Ende ausgehend über den gesamten Umfang (Umschlingungswinkel) von der Umfangsfläche 12.2 abgehoben ist und somit möglichst reibungsarm gelagert ist und sich die aufgebrachte Spannkraft F über die gesamte Maßbandlänge homogen verteilt. Dieser Zustand ist in Figur 15 dargestellt.

Nach erfolgtem Spannungsausgleich werden die miteinander verbundenen Wagen 30.2 entfernt und so ausgehend vom Fixpunkt P die Unterstützung des Maßbandes 1.2 aufgehoben, so dass sich das Maßband 1.2 ausgehend vom ersten fixierten Ende des Maßbandes 1.2, also dem Fixpunkt P, tangential an die Umfangsfläche 12.2 anlegt. Die Spannkraft F bleibt dabei aufrecht.

Bei großen Maßbandlängen kann die Unterstützung des Maßbandes 1.2 auch aus mehreren Ketten bestehen, wobei eine Kette jeweils aus mehreren über jeweils einen Verbindungskörper miteinander verbundenen Wagen 30.2 besteht. In diesem Fall werden diese jeweils mehrere Wagen 30.2 aufweisenden Ketten nacheinander zwischen der Umfangsfläche 11.2 und dem Maßband 1.2 eingeschoben.

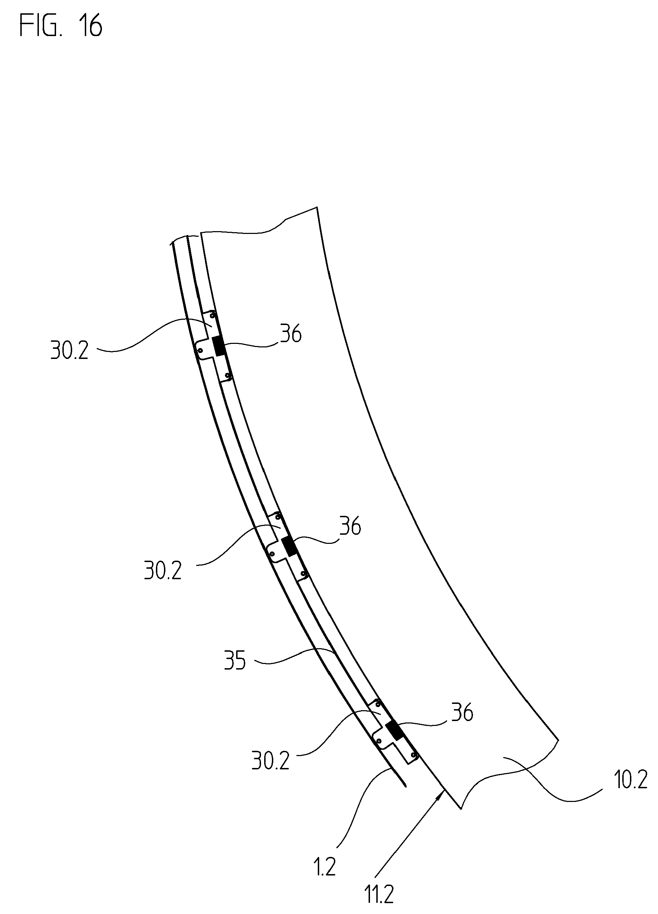

Wie in Figur 16 schematisch dargestellt ist, können die Wagen 30.2 Magnete 36 aufweisen, die gewährleisten, dass die Wagen 30.2 gut an der Umfangfläche 11.2 anliegen ohne herauszufallen. Hierzu stehen die Magnete 36 der Umfangsfläche 12.2 des Trägers 10.2 in geringem Abstand gegenüber. Dabei muss der Träger 10.2 entsprechend aus einem ferromagnetischen Material bestehen oder zumindest im Bereich der Magnete 36 ein ferromagnetisches Material aufweisen.

Bei allen Ausführungsbeispielen können die Unterstützungen oder zumindest eine der Unterstützungen mit einer Art Bremse versehen sein, um diese am Träger an einer gewünschten Umfangsposition zu fixieren. Diese Art Bremse kann beispielsweise realisiert werden, indem die Unterstützung am Träger ortsfest klemmbar ist, wozu an der Unterstützung ein Klemmmechanismus zum Klemmen vorgesehen ist.

In den bisher erläuterten Beispielen erfolgt als erster Verfahrensschritt die Umschlingung des Trägers 10, 10.1, 10.2 mit dem Maßband 1, 1.1, 1.2 und erst danach erfolgt das Einbringen der Unterstützungen, beispielsweise in Form der Wagen 30, 30.1, 30.2. Alternativ ist es auch möglich, zuerst die Unterstützungen anzuordnen und das Maßband erst in einem Folgeschritt auf die Unterstützungen aufzulegen und nachfolgend die Spannkraft F auf das Maßband auszuüben. Ebenso können Maßband und Unterstützungen auch gemeinsam aufgebracht, also gleichzeitig montiert werden.

Anstelle der über den Umfang des Trägers 10, 10.1, 10.2 verschiebbaren Wagen 30, 30.1, 30.2 können als Unterstützungen auch an dem Träger 10, 10.1, 10.2 befestigte Elemente angebracht werden, welche ein lokales Abheben des Maßbandes 1, 1.1, 1.2 für die Zeit des homogenen Ausgleichs der Spannkraft F des Maßbandes 1, 1.1, 1.2 erlauben.

## Patentansprüche

1. Verfahren zur Montage eines Maßbandes (1, 1.1, 1.2) an einer Umfangsfläche (12, 12.1, 12.2) eines Trägers (10, 10.1, 10.2) mit folgenden Verfahrensschritten:
- Umschlingen der Umfangsfläche (11, 11.1, 11.2) des Trägers (10, 10.1, 10.2) mit dem Maßband (1, 1.1, 1.2) und Unterstützen des Maßbandes (1, 1.1, 1.2) derart, dass es beabstandet zu der Umfangsfläche (11, 11.1, 11.2) des Trägers (10, 10.1, 10.2) verläuft und Ausüben einer Spannkraft (F) auf das Maßband (1, 1.1, 1.2) in diesem reibungsarm über den Umfang der Umfangsfläche (11, 11.1, 11.2) gehaltenen Zustand des Maßbandes (1, 1.1, 1.2), wobei sich die Spannkraft (F) zumindest annähernd gleichmäßig über den Umfang verteilt und das Maßband (1, 1.1, 1.2) während der Verteilung der Spannkraft (F) über den Umfang mittels in Umfangsrichtung voneinander beabstandet angeordneter Unterstützungen (30, 30.1, 30.2) von der Umfangsfläche (11, 11.1, 11.2) des Trägers (10, 10.1, 10.2) beabstandet gehalten wird;
- Aufheben der Unterstützung des Maßbandes (1, 1.1, 1.2) ausgehend von einem Fixpunkt (P) und Anlegen des Maßbandes (1, 1.1, 1.2) an die Umfangsfläche (11, 11.1, 11.2) des Trägers (10, 10.1, 10.2) bei Aufrechterhaltung der Spannkraft (F).

2. Verfahren nach Anspruch 1, **dadurch gekennzeichnet, dass** das Maßband (1 1.1, 1.2) während der Verteilung der Spannkraft (F) an Führungsrollen (32, 32.1, 32.2) der Unterstützungen (30, 30.1, 30.2) anliegt.

3. Verfahren nach einem der vorhergehenden Ansprüche, **dadurch gekennzeichnet, dass** das Aufheben der Unterstützung des Maßbandes (1, 1.1, 1.2) durch Verschieben der Unterstützungen (30, 30.1, 30.2) in einer in Umfangsrichtung verlaufenden Nut (12, 12.1, 12.2) des Trägers (10, 10.1, 10.2) erfolgt.

4. Vorrichtung zur Montage eines Maßbandes (1, 1.1, 1.2) an einer Umfangsfläche (11, 11 1, 11.2) eines Trägers (10, 10.1, 10.2), die zum Unterstützen des Maßbandes (1, 1.1, 1.2) eine Mehrzahl von in Umfangsrichtung voneinander beabstandet angeordneter Unterstützungen (30, 30.1, 30.2) aufweist, die derart ausgebildet sind, dass das Maßband (1, 1.1, 1.2) beabstandet zu der Umfangsfläche (11, 11.1, 11.2) des Trägers (10, 10.1, 10.2) verläuft, während eine Spannkraft (F) auf das Maßband (1, 1.1, 1.2) ausübbar ist, wobei sich die Spannkraft (F) zumindest annähernd gleichmäßig über den Umfang der Umfangsfläche (11, 11.1, 11.2) verteilt, und die dazu ausgebildet ist, die Unterstützung des Maßbandes (1, 1.1, 1.2) aufzuheben derart, dass sich das Maßband (1, 1.1, 1.2) ausgehend von einem Fixpunkt (P) an die Umfangsfläche (11, 11.1, 11.2) des Trägers (10, 10.1, 10.2) bei Aufrechterhaltung der Spannkraft (F) anlegt.

5. Vorrichtung nach Anspruch 4, **dadurch gekennzeichnet, dass** die Unterstützungen (30, 30.1, 30.2) jeweils eine drehbar gelagerte Führungsrolle (32, 32.1, 32.2) aufweisen, an der das Maßband (1. 1.1, 1.2) anliegt.

6. Vorrichtung nach einem der Ansprüche 4 oder 5, **dadurch gekennzeichnet, dass** die Unterstützungen (30, 30.1) unabhängig voneinander in Umfangsrichtung verlagerbar sind.

7. Vorrichtung nach einem der Ansprüche 4 oder 5, **dadurch gekennzeichnet, dass** mehrere Unterstützungen (30.2) mittels eines Verbindungskörpers (35) miteinander gekoppelt sind und gemeinsam in Umfangsrichtung verlagerbar sind.

8. Vorrichtung nach einem der Ansprüche 4 bis 7, **dadurch gekennzeichnet, dass** die Unterstützungen (30, 30.1, 30.2) Laufrollen (31, 31.2) aufweisen, mittels derer sie in Umfangsrichtung verlagerbar am Träger (10, 10.1, 10.2) geführt sind.

9. Vorrichtung nach einem der Ansprüche 4 bis 8, **dadurch gekennzeichnet, dass** zumindest eine der Unterstützungen (30.2) einen Magneten (36) aufweist.

10. Vorrichtung nach einem der Ansprüche 4 bis 9, **dadurch gekennzeichnet, dass** zumindest eine der Unterstützungen (30, 30.1) ausgebildet ist, um den Abstand zwischen der Umfangsfläche (11, 11.1) und dem Maßband (1, 1.1) zu verändern.

11. Baueinheit mit
einem Maßband (1, 1.1, 1.2), das an einer Umfangsfläche (11, 11.1, 11.2) des Trägers (10, 10.1, 10.2) montierbar ist, und mit einer Vorrichtung zur Montage des Maßbandes (1, 1.1, 1.2) an der Umfangsfläche (11, 11.1, 11.2) des Trägers (10, 10.1, 10.2) nach Anspruch 4.

## Claims

1. Method for fitting a measuring tape (1, 1.1, 1.2) to a peripheral surface (12, 12.1, 12.2) of a carrier (10, 10.1, 10.2), comprising the following method steps:
- wrapping the peripheral surface (11, 11.1, 11.2) of the carrier (10, 10.1, 10.2) with the measuring tape (1, 1.1, 1.2) and supporting the measuring tape (1, 1.1, 1.2) in such a way that it runs at a distance from the peripheral surface (11, 11.1, 11.2) of the carrier (10, 10.1, 10.2) and exerting a clamping force (F) on the measuring tape (1, 1.1, 1.2) in this state of the measuring tape (1, 1.1, 1.2) held with low friction over the extent of the peripheral surface (11, 11.1, 11.2), wherein the clamping force (F) is distributed at least approximately uniformly over the periphery, and the measuring tape (1, 1.1, 1.2) is kept at a distance from the peripheral surface (11, 11.1, 11.2) of the carrier (10, 10.1, 10.2) during the distribution of the clamping force (F) over the periphery, by means of supports (30, 30.1, 30.2) arranged at a distance from one another in the peripheral direction;
- cancelling the support of the measuring tape (1, 1.1, 1.2), starting from a fixed point (P), and applying the measuring tape (1, 1.1, 1.2) to the peripheral surface (11, 11.1, 11.2) of the carrier (10, 10.1, 10.2) whilst maintaining the clamping force (F).

2. Method according to Claim 1, **characterized in that** the measuring tape (1, 1.2, 1.2) rests on guide rollers (32, 32.1, 32.2) of the supports (30, 30.1, 30.2) during the distribution of the clamping force (F).

3. Method according to one of the preceding claims, **characterized in that** the support of the measuring tape (1, 1.1, 1.2) is cancelled by displacing the supports (30, 30.1, 30.2) in a groove (12, 12.1, 12.2), running in the peripheral direction, of the carrier (10, 10.1, 10.2).

4. Device for fitting a measuring tape (1, 1.1, 1.2) to a peripheral surface (11, 11.1, 11.2) of a carrier (10, 10.1, 10.2) which, to support the measuring tape (1, 1.1, 1.2), has a multiplicity of supports (30, 30.1, 30.2) arranged at a distance from one another in the peripheral direction, which are formed in such a way that the measuring tape (1, 1.1, 1.2) runs at a distance from the peripheral surface (11, 11.1, 11.2) of the carrier (10, 10.1, 10.2) while a clamping force (F) can be exerted on the measuring tape (1, 1.1, 1.2), wherein the clamping force (F) is distributed at least approximately uniformly over the extent of the peripheral surface (11, 11.1, 11.2), and which is designed to cancel the support of the measuring tape (1, 1.1, 1.2) in such a way that, starting from a fixed point (P), the measuring tape (1, 1.1, 1.2) rests on the peripheral surface (11, 11.1, 11.2) of the carrier (10, 10.1, 10.2) whilst the clamping force (F) is maintained.

5. Device according to Claim 4, **characterized in that** the supports (30, 30.1, 30.2) each have a rotatably mounted guide roller (32, 32.1, 32.2), on which the measuring tape (1, 1.1, 1.2) rests.

6. Device according to either of Claims 4 and 5, **characterized in that** the supports (30, 30.1) can be displaced independently of one another in the peripheral direction.

7. Device according to either of Claims 4 and 5, **characterized in that** a plurality of supports (30.2) are coupled to one another by means of a connecting element (35) and can be displaced jointly in the peripheral direction.

8. Device according to one of Claims 4 to 7, **characterized in that** the supports (30, 30.1, 30.2) have running rollers (31, 31.2), by means of which they are guided on the carrier (10, 10.1, 10.2) such that they are displaceable in the peripheral direction.

9. Device according to one of Claims 4 to 8, **characterized in that** at least one of the supports (30.2) has a magnet (36).

10. Device according to one of Claims 4 to 9, **characterized in that** at least one of the supports (30, 30.1) is designed to change the distance between the peripheral surface (11, 11.1) and the measuring tape (1, 1.1).

11. Unit comprising
a measuring tape (1, 1.1, 1.2) which can be fitted to a peripheral surface (11, 11.1, 11.2) of the carrier (10, 10.1, 10.2), and comprising a device for fitting the measuring tape (1, 1.1, 1.2) to the peripheral surface (11, 11.1, 11.2) of the carrier (10, 10.1, 10.2) according to Claim 4.

## Revendications

1. Procédé destiné au montage d'une bande de mesure (1, 1.1, 1.2) à une surface périphérique (12, 12.1, 12.2) d'un support (10, 10.1, 10.2) avec les étapes de procédé suivantes :
- enlacement de la surface périphérique (11, 11.1, 11.2) du support (10, 10.1, 10.2) avec la bande de mesure (1, 1.1, 1.2) et appui de la bande de mesure (1, 1.1, 1.2) de telle sorte qu'elle s'étende à une certaine distance de la surface périphérique (11, 11.1, 11.2) du support (10, 10.1, 10.2) et application d'une force de serrage (F) sur la bande de mesure (1, 1.1, 1.2) dans cet état, maintenu avec de faibles frottements sur toute la périphérie de la surface périphérique (11, 11.1, 11.2), de la bande de mesure (1, 1.1, 1.2), la force de serrage (F) étant au moins répartie approximativement de façon régulière sur toute la périphérie et la bande de mesure (1, 1.1, 1.2) étant maintenue pendant la répartition de la force de serrage (F) sur toute la périphérie à l'aide d'appuis (30, 30.1, 30.2) disposés à une certaine distance les uns des autres par rapport à la surface périphérique (11, 11.1, 11.2) du support (10, 10.1, 10.2), dans la direction périphérique ;
- suppression de l'appui de la bande de mesure (1, 1.1, 1.2) à partir d'un point de fixation (P) et application de la bande de mesure (1, 1.1, 1.2) contre la surface périphérique (11, 11.1, 11.2) du support (10, 10.1, 10.2) en maintenant la force de serrage (F).

2. Procédé selon la revendication 1, **caractérisé en ce que** la bande de mesure (1, 1.1, 1.2) repose, pendant la répartition de la force de serrage (F), contre les rouleaux de guidage (32, 32.1, 32.2) des appuis (30, 30.1, 30.2).

3. Procédé selon l'une quelconque des revendications précédentes, **caractérisé en ce que** la suppression de l'appui de la bande de mesure (1, 1.1, 1.2) s'effectue par déplacement des appuis (30, 30.1, 30.2) dans une rainure (12, 12.1, 12.2), s'étendant dans la direction périphérique, du support (10, 10.1, 10.2).

4. Dispositif destiné au montage d'une bande de mesure (1, 1.1, 1.2) à une surface périphérique (11, 11.1, 11.2) d'un support (10, 10.1, 10.2) comprenant, pour maintenir la bande de mesure (1, 1.1, 1.2), une pluralité d'appuis (30, 30.1, 30.2) disposés à une certaine distance les uns des autres dans la direction périphérique et réalisés de telle sorte que la bande de mesure (1, 1.1, 1.2) s'étende à une certaine distance de la surface périphérique (11, 11.1, 11.2) du support (10, 10.1, 10.2), pendant qu'une force de serrage (F) peut être exercée sur la bande de mesure (1, 1.1, 1.2), la force de serrage (F) étant répartie au moins approximativement de façon uniforme sur toute la périphérie de la surface périphérique (11, 11.1, 11.2) et celle-ci étant réalisée pour exercer l'appui de la bande de mesure (1, 1.1, 1.2) de telle sorte que la bande de mesure (1, 1.1, 1.2) s'appuie, à partir d'un point de fixation (P), contre la surface périphérique (11, 11.1, 11.2) du support (10, 10.1, 10.2) en maintenant la force de serrage (F).

5. Dispositif selon la revendication 4, **caractérisé en ce que** les appuis (30, 30.1, 30.2) comportent respectivernent un bouleau de guidage (32, 32.1, 32.2) disposé de façon à pouvoir tourner et contre lequel la bande de mesure (1, 1.1, 1.2) repose.

6. Dispositif selon l'une quelconque des revendications 4 ou 5, **caractérisé en ce que** les appuis (30, 30.1) peuvent être déplacés indépendamment les uns des autres dans la direction périphérique.

7. Dispositif selon l'une quelconque des revendications 4 ou 5, **caractérisé en ce que** plusieurs appuis (30.2) sont couplés entre eux à l'aide d'un corps de liaison (35) et peuvent être déplacés ensemble dans la direction périphérique.

8. Dispositif selon l'une quelconque des revendications 4 à 7, **caractérisé en ce que** les appuis (30, 30.1, 30.2) comportent des galets de roulement (31, 31.2), à l'aide desquels ils sont guidés au niveau du support (10, 10.1, 10.2) de façon à pouvoir être déplacés dans la direction périphérique.

9. Dispositif selon l'une quelconque des revendications 4 à 8, **caractérisé en ce qu'**au moins un des appuis (3C.2) comporte un aimant (36).

10. Dispositif selon l'une quelconque des revendications 4 à 9, **caractérisé en ce qu'**au moins un des appuis (30, 30.1) est réalisé pour faire varier la distance entre la surface périphérique (11, 11.1) et la bande de mesure (1, 1.1).

11. Unité de construction avec :
une bande de mesure (1, 1.1, 1.2) pouvant être montée à une surface périphérique (11, 11.1, 11.2) du support (10, 10.1, 10.2 ; et avec
un dispositif destiné au montage de la bande de mesure (1, 1.1, 1.2) au niveau de la surface périphérique (11, 11.1, 11.2) du support (10, 10.1, 10.2) selon la revendication 4.
